# EUROPÄISCHE PATENTANMELDUNG

(11) **EP 3 840 107 A1**
(43) Veröffentlichungstag der Anmeldung: **23.06.2021**
(21) Anmeldenummer: 20215447.2
(22) Anmeldetag: 18.12.2020
(51) Int. Cl.: H01M 10/613

(54) **AKKUPACK MIT AN STOFFSCHLÜSSIGER VERBINDUNG AUS KUNSTSTOFF UND METALLBLECHEN ANGEBUNDENEN ZYLINDRISCHEN ZELLEN UND HERSTELLVERFAHREN DAFÜR**

(30) Priorität: 20.12.2019 DE 202019107170 U
(71) Anmelder: Stoba E-Systems GmbH, 71384 Weinstadt (DE)
(72) Erfinder: GRAUER, Manuel, 71384 Weinstadt (DE); AHRENS, Thomas, 71543 Wüstenrot (DE)
(74) Vertreter: Winter, Brandl - Partnerschaft mbB

(57) **Zusammenfassung**

Die Erfindung betrifft einen Akkupack (1) für eine Energieversorgung eines Elektromotors, mit einer Vielzahl von Stromspeicherzellen (2), wobei die Stromspeicherzellen (2) im Bereich von elektrischen Anschlüssen mit einem Stromleiter (3) verbunden sind, wobei der Stromleiter (3) wenigstens einen Kühlkanal (4) ausbildet. Die Erfindung betrifft ferner ein Verfahren zum Herstellen eines Akkupacks (1), insbesondere ein solches, bei der erst die zylindrischen Zellen auf einen Ableiter / Verbinder (5) geschweißt werden und anschließend die Verbinder (5) in ein Kunststoffgehäuse (7) bzw. einen Kunststoffkörper eingelegt werden, wobei danach Metallbleche und der Kunststoffkörper miteinander verschweißt werden, wobei ferner eine stoffschlüssige Verbindung, die dadurch entsteht, den Kühlkörper abdichtet.

## Beschreibung

Die Erfindung betrifft die Kühlung eines Akkupacks umfassend zylindrische Zellen über einen Pol mit Hilfe von Kühlkörpern, aufgebaut aus der stoffschlüssigen Verbindung eines Kunststoffs und Metallblechen. Genauer gesagt, betrifft die Erfindung einen Akkupack für eine Energieversorgung eines Elektromotors, in einer Vielzahl von Stromspeicherzellen, wobei die Stromspeicherzellen im Bereich von elektrischen Anschlüssen mit einem Stromleiter verbunden sind.

Aus dem Stand der Technik sind bereits Akkupacks bekannt, welche üblicherweise eingesetzt werden, um eine Elektrifizierung eines Antriebsstranges zu gewährleisten. Üblicherweise wird die Kühlung einer in einem Akkupack enthaltenen zylindrischen Zelle über einen Mantel des Akkupacks und/oder der zylindrischen Zelle mittels einer Luftkühlung oder über Kühlschlangen erreicht.

Leider ist diese Art der Kühlung ineffizient, bedingt durch die gerollte Bauform der üblicherweise zylindrisch ausgebildeten Akkuzellen. Auch ist eine inhomogene Kühlung der Zellen die Folge. Als negative Begleiterscheinung ergeben sich dadurch die Verringerung der Lebensdauer und eine aufwändige Montage bei Verwendung von Kühlschlangen.

Es ist die Aufgabe der vorliegenden Erfindung eine Kühlung einer zylindrischen Zelle in einem Akkupack zur Verfügung zu stellen, und gleichzeitig auch die Leitung des elektrischen Stroms der Zellen zu gewährleisten, wobei jedoch die aus dem Stand der Technik bekannten Nachteile vermieden werden sollen. Insbesondere soll eine bauraumoptimierte, kostengünstige und leicht herzustellende Ausgestaltung erreicht werden.

Dies wird bei einem gattungsgemäßen Akkupack erfindungsgemäß dadurch erreicht, dass der Stromleiter wenigstens einen Kühlkanal ausbildet. Bei einer solchen erfindungsgemäßen Ausgestaltung wird zumindest eine der zylindrischen Zellen über ihren Pol gekühlt. In vorteilhafter Weise werden alle zylindrischen Zellen über ihre Pole gekühlt. Der Kühlkörper platziert an beiden Polen, ist aufgebaut aus einer stoffschlüssigen Verbindung eines Kunststoffs und wenigstens eines Metallbleches.

Vorteilhafte Ausführungsformen sind in den Unteransprüchen beansprucht und nachfolgend näher erläutert.

So ist es gerade von Vorteil, wenn der Stromleiter ein Kunststoffgehäuse besitzt und/oder Metallbleche. Das Kunststoffgehäuse kann in einem ersten Schritt hergestellt werden, wobei die Konturen eines Kühlkanals ausgebildet werden. Der die Kühlkanäle beinhaltende Kunststoffkörper kann auf zwei gegenüberliegenden Seiten geöffnet sein, wobei in einem nachfolgenden Schritt Metallplatten dort eingelegt werden. Die Montage wird somit erleichtert, da dadurch kostengünstige Materialien und Fertigungsverfahren einsetzbar sind.

Es ist auch von Vorteil, wenn die Metallbleche mit dem Kunststoffgehäuse stoffschlüssig verbunden sind, insbesondere verschweißt sind, etwa laser- oder widerstandsverschweißt sind. Durch die stoffschlüssige Verbindung wird eine Dauerfestigkeit gewährleistet.

Auch ist es von Vorteil, wenn die plattenartigen Metallbleche in das Kunststoffgehäuse eingelegt sind, sodass eine sequenzielle Fertigung ermöglicht ist.

Eine vorteilhafte Ausführungsform ist auch dadurch gekennzeichnet, dass die elektrischen Anschlüsse an einen Verbinder aufgeschweißt sind. Die zylindrischen Zellen werden auf einen Ableiter / Verbinder geschweißt, welcher neben der thermischen auch für die elektrische Leitung zuständig ist. Der Verbinder kann bspw. aus Metall hergestellt sein, etwa aus Aluminium, Stahl, insbesondere vernickeltem Stahl oder Kupfer. Es ist also von Vorteil, wenn der Verbinder aus Aluminium, Stahl, wie vernickeltem Stahl und/oder Kunststoff aufgebaut ist.

Ferner hat es sich bewährt, wenn der Verbinder mit dem einen Kühlkörper ausbildenden Stromleiter verbunden ist.

Es ist zweckmäßig, wenn der Kühlkanal mit einer elektrisch nicht-leitenden Flüssigkeit, wie Öl, befüllt ist oder befüllbar ist und/oder auf der Innenseite eine elektrisch isolierende Beschichtung besitzt.

Die zylindrischen Zellen können an dem Verbinder über Widerstandsschweißverfahren oder Laserschweißverfahren befestigt werden.

Es ist möglich in einem nach dem Verbinden der zylindrischen Zellen mit dem Verbinder / Ableiter nachfolgenden Schritt die Verbinder in den Kunststoffkörper einzulegen. Die Metallbleche und der Kunststoffkörper werden miteinander verschweißt. Durch die stoffschlüssige Verbindung sind die Kühlkörper abgedichtet.

Um die Kühlflüssigkeit elektrisch zu isolieren sind, wie bereits erläutert, bspw. zwei Methoden denkbar, nämlich eine Verwendung einer elektrisch nicht-leitfähigen Kühlflüssigkeit, z. B. Öl, oder/und eine einseitige Beschichtung der Metallplatten mit einer elektrisch isolierenden Beschichtung.

Das wesentlich Neue der Erfindung ist nun darin zu sehen, dass eine Integration von Kühlkörper(n) und Zellverbinder erreicht wird. Es stellt sich der Vorteil eines kleinen Bauraumes, einer homogenen Zellkühlung in einer verbesserten Lebensdauer ein. Die Produktion wird wirtschaftlicher und die Integration von Bauteilen ist die Folge.

Die Erfindung betrifft insbesondere auch ein Verfahren zum Herstellen eines Akkupacks, insbesondere ein solches, bei der erst die zylindrischen Zellen auf einen Ableiter / Verbinder geschweißt werden und anschließend die Verbinder in den Kunststoffkörper eingelegt werden. Danach werden die Metallbleche und der Kunststoffkörper miteinander verschweißt, wobei die stoffschlüssige Verbindung, die dadurch entsteht, den Kühlkörper abdichtet.

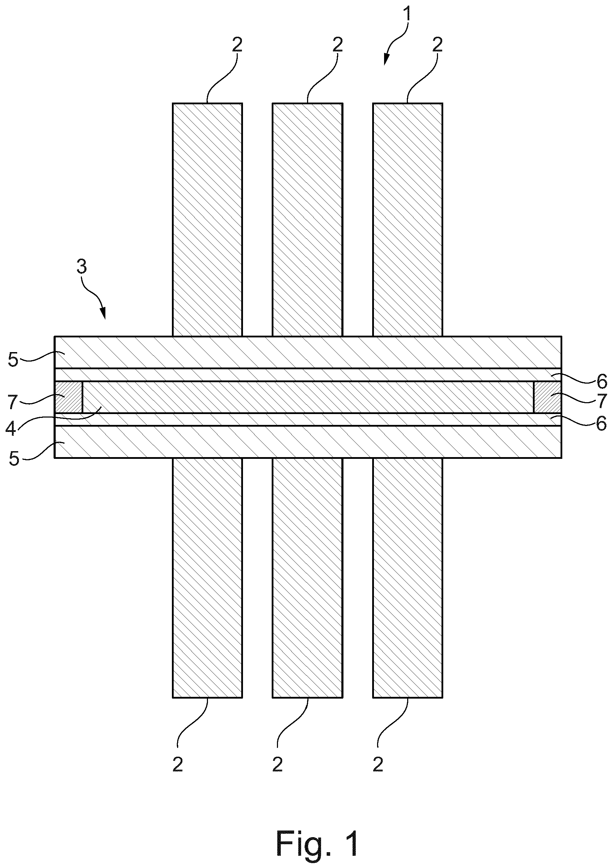

Die Erfindung wird nachfolgend mit Hilfe einer Zeichnung näher erläutert. Dabei ist in einer alleinigen Fig. 1 ein schematischer Querschnitt durch eine Vielzahl von Stromspeicherzellen dargestellt, die auf zwei Seiten eines Stromleiters mit diesem verbunden sind.

Die Figur ist lediglich schematischer Natur und dient nur dem Verständnis der Erfindung.

In Fig. 1 ist eine erste Ausführungsform eines erfindungsgemäßen Akkupacks 1 dargestellt. Der Akkupack 1 weist zumindest sechs Stromspeicherzellen 2 auf. Auf jeder Seite eines Stromleiters 3 sind je drei Stromspeicherzellen 2 vorhanden.

Im Inneren des Stromleiters 3 ist ein Kühlkanal 4 vorhanden. Der Stromleiter 3 umfasst einen Verbinder 5 auf jeder Seite. Der Verbinder 5 kann auch als Ableiter bezeichnet werden. Im Inneren des Kühlkanales 4 befindet sich auf den beiden den Kühlkanal 4 definierenden Seiten des Verbinders 5 elektrisch isolierende Beschichtungen 6. Der Kühlkanal 4 ist durch ein Kunststoffgehäuse 7 verschlossen.

### Bezugszeichenliste

- 1: Akkupack
- 2: Stromspeicherzelle
- 3: Stromleiter
- 4: Kühlkanal
- 5: Verbinder
- 6: elektrisch isolierende Beschichtung
- 7: Kunststoffgehäuse

## Patentansprüche

1. Akkupack (1) für eine Energieversorgung eines Elektromotors, mit einer Vielzahl von Stromspeicherzellen (2), wobei die Stromspeicherzellen (2) im Bereich von elektrischen Anschlüssen mit einem Stromleiter (3) verbunden sind, **dadurch gekennzeichnet, dass** der Stromleiter (3) wenigstens einen Kühlkanal (4) ausbildet.

2. Akkupack (1) nach Anspruch 1, **dadurch gekennzeichnet, dass** der Stromleiter (3) ein Kunststoffgehäuse (7) bzw. einen Kunststoffkörper besitzt und/oder Metallbleche.

3. Akkupack (1) nach Anspruch 2, **dadurch gekennzeichnet, dass** die Metallbleche mit dem Kunststoffgehäuse (7) stoffschlüssig verbunden sind.

4. Akkupack (1) nach Anspruch 2 oder 3, **dadurch gekennzeichnet, dass** die plattenartigen Metallbleche in das Kunststoffgehäuse (7) eingelegt sind.

5. Akkupack (1) nach einem der Ansprüche 1 bis 4, **dadurch gekennzeichnet, dass** die elektrischen Anschlüsse an einen Verbinder (5) aufgeschweißt sind.

6. Akkupack (1) nach Anspruch 5, **dadurch gekennzeichnet, dass** der Verbinder (5) mit dem einen Kühlkörper ausbildenden Stromleiter (3) verbunden ist.

7. Akkupack (1) nach Anspruch 5 oder 6, **dadurch gekennzeichnet, dass** der Verbinder (5) aus Aluminium, Stahl und/oder Kunststoff aufgebaut ist.

8. Akkupack (1) nach einem der Ansprüche 1 bis 7, **dadurch gekennzeichnet, dass** der Kühlkanal (4) mit einer elektrisch nicht-leitenden Flüssigkeit befüllt ist oder befüllbar ist und/oder auf der Innenseite eine elektrisch isolierende Beschichtung (6) besitzt.

9. Verfahren zum Herstellen eines Akkupacks (1), insbesondere ein solches, bei der erst die zylindrischen Zellen auf einen Ableiter / Verbinder (5) geschweißt werden und anschließend die Verbinder (5) in ein Kunststoffgehäuse (7) bzw. einen Kunststoffkörper eingelegt werden, etwa nach einem der Ansprüche 1 bis 9, wobei danach Metallbleche und der Kunststoffkörper miteinander verschweißt werden und wobei ferner eine stoffschlüssige Verbindung, die dadurch entsteht, den Kühlkörper abdichtet.
